# FASCICULE DE BREVET EUROPEEN

(11) **EP 2 271 848 B1**
(45) Date de publication et mention de la délivrance du brevet: **08.05.2013**
(21) Numéro de dépôt: 09727891.5
(22) Date de dépôt: 17.03.2009
(51) Int. Cl.: F15B 15/19, F15B 15/26, B60R 21/34

(54) **VERIN LEVE CAPOT AVEC AGENCEMENT DE FREINAGE EN RETOUR DESAMORCABLE.**
STELLZYLINDER ZUM ANHEBEN EINER MOTORHAUBE, MIT DEAKTIVIERBARER BREMSVORRICHTUNG FÜR DIE RÜCKBEWEGUNG.
HOOD-LIFTING ACTUATOR WITH DISARMABLE RETURN BRAKING ARRANGEMENT

(30) Priorité: 18.03.2008 FR 0851734
(43) Date de publication de la demande: 12.01.2011
(73) Titulaire: SNPE Matériaux Energétiques, 75004 Paris (FR)
(72) Inventeur: BORG, Evrard, F-33127 Martignas Sur Jalle (FR); LASPESA, Eric, F-84210 Althen des Paluds (FR); NADEAU, Jean-Paul, F-33160 Saint Medard en Jalles (FR)
(74) Mandataire: Intès, Didier Gérard André
(86) Numéro de dépôt international: PCT/FR2009/050430
(87) Numéro de publication internationale: WO 2009/122080

(56) Documents cités:
- EP-A- 1 201 506
- EP-A- 1 431 136
- DE-A1-102006 028 754
- FR-A- 1 373 484

## Description

L'invention se rapporte à un vérin à course déclenchée destiné à être intégré à un système de sécurité ayant pour but de protéger un piéton en cas de choc frontal avec un véhicule automobile. L'invention concerne plus particulièrement un perfectionnement d'un tel vérin permettant de ramener ce système de sécurité à sa position d'origine, après déclenchement, lorsque les circonstances le permettent et notamment suite à une fausse détection ou en cas d'évitement de l'obstacle.

Le brevet FR 2 878 212 décrit un système de sécurité pour la protection d'un piéton lorsque celui-ci est percuté par un véhicule automobile. Ce système comprend un mécanisme permettant de soulever rapidement le capot du véhicule automobile en cas de collision. En effet, en cas de collision, la tête du piéton heurte fréquemment le capot du véhicule. Ce choc de la tête sur le capot provoque des déformations du capot. Au-delà d'une certaine déformation, le capot entre en contact avec le bloc-moteur et toutes les pièces rigides qui entourent ce moteur. C'est à ce moment que la tête du piéton subit la plus forte décélération pouvant causer de graves blessures à la victime. C'est pourquoi, le système mentionné ci-dessus est conçu pour soulever brusquement le capot d'une certaine hauteur de manière à éviter que le piéton et notamment sa tête vienne heurter le bloc-moteur après une déformation du capot. Le soulèvement du capot est effectué au niveau de l'arrière de celui-ci, c'est-à-dire du côté du pare-brise, le capot restant fixé à l'avant du véhicule automobile.

Ainsi, un tel dispositif de sécurité, s'il est actionné à temps par des moyens de détection appropriés, permet de soulever le capot de 80 mm en moins de 30 millisecondes, c'est-à-dire dans un intervalle de temps très court après la détection d'un choc imminent.

Il est aussi connu, après soulèvement du capot, de permettre un retour amorti du capot pouvant accompagner le choc sur le capot de façon à amoindrir l'impact de celui-ci. Ce système d'amortissement en retour est avantageusement combiné au vérin ayant soulevé le capot. De cette façon, l'ensemble constitué par le capot, le mécanisme de soulèvement et le piston du vérin se rétracte sous l'impact (après soulèvement du capot) tout en étant freiné puis bloqué. Le dispositif d'amortissement est agencé dans le corps entre le piston et la tige pour un encombrement minimum et un surcoût négligeable.

Cependant, il arrive que le système de sécurité décrit ci-dessus soit actionné et par conséquent que le capot soit soulevé, sans que l'accident ait lieu, par exemple en cas de détection erronée ou si le piéton ne heurte pas le capot. Dans une telle circonstance, il est souhaitable qu'après l'incident, l'automobiliste puisse repositionner le capot (qui n'a pas été déformé) dans sa position initiale, ceci de façon simple et intuitive.

Un vérin à course déclenché, muni d'un agencement de freinage en retour, est connu du document EP 1 201 506. Cependant, dans ce document, le piston est manoeuvré à partir d'un moteur électrique par un système à engrenages.

La présente invention a pour objet un système de sécurité intégrant un vérin à course déclenchée permettant un retour du capot dans sa position initiale en cas de non choc. En particulier, le vérin selon l'invention comprend un agencement de freinage en retour pouvant être automatiquement désamorcé au bout d'un certain laps de temps après soulèvement du capot. Lorsque l'agencement de freinage est ainsi désamorcé, le capot (non déformé) peut être rabattu dans sa position initiale sans précaution particulière, ou peut se refermer automatiquement sous l'effet de son propre poids.
Un vérin à course déclenchée selon l'invention est défini dans la revendication 1. Ce vérin est du type comportant un corps abritant un ensemble mobile comprenant un piston et une tige faisant saillie à une extrémité dudit corps, des moyens pour propulser ledit piston en réponse à une commande de déclenchement, et un agencement de freinage en retour, caractérisé en ce que l'ensemble mobile comprend un élément coulissant mobile dans ledit corps, en ce que l'agencement de freinage en retour comprend au moins une bille logée dans une cavité annulaire délimitée par la surface interne dudit corps et par ledit élément coulissant, ladite cavité comportant deux tronçons adjacents dans le prolongement l'un de l'autre, un premier tronçon de hauteur radiale supérieure au diamètre de ladite bille et un second tronçon de hauteur radiale décroissante à partir de l'extrémité dudit premier tronçon, en ce que l'agencement de freinage en retour comporte un ressort de rappel reliant ledit élément coulissant audit piston, et en ce que l'agencement de freinage en retour comporte en outre un élément de liaison reliant la au moins une bille au piston, la bille étant solidaire du déplacement de l'élément de liaison et positionnée par l'élément de liaison dans ledit premier tronçon de la cavité annulaire lorsque le ressort de rappel est détendu, et dans le second tronçon lorsque le ressort de rappel est comprimé, de sorte que l'agencement de freinage est désamorcé lorsque l'effort appliqué sur le piston redevient inférieur à une valeur seuil.

Le piston, l'élément coulissant et la tige peuvent former trois pièces indépendantes espacées longitudinalement les unes des autres dans le corps, dans cet ordre.

Avantageusement, l'effort appliqué sur le piston résulte de la pression régnant dans une chambre d'expansion des gaz, dont le piston constitue une paroi, après fonctionnement d'un générateur de gaz. C'est le cas par exemple des vérins de type classique, dans lesquels des moyens de propulsion du piston en réponse à une commande de déclenchement comportent un générateur de gaz à actionnement pyrotechnique, monté dans le corps en regard du piston, ou des vérins à actionnement pneumatique. De cette façon, l'agencement de freinage est désamorcé lorsque la pression dans la chambre du piston redevient inférieure à une valeur seuil. Dans le cas d'un générateur de gaz à actionnement pyrotechnique, le simple refroidissement des gaz peut permettre d'atteindre cette valeur de seuil au bout d'un certain temps.

De manière préférentielle, le vérin comporte un orifice de fuite, calibré, destiné à baisser progressivement le niveau de pression dans la chambre d'expansion des gaz et à désamorcer ainsi l'agencement de freinage en retour. L'orifice de fuite peut s'avérer particulièrement utile pour les vérins à actionnement pyrotechnique dans lesquels le refroidissement des gaz après combustion n'entraîne pas une diminution de volume suffisante pour permettre un retour rapide du piston dans sa position initiale. L'orifice de fuite peut être formé dans le corps du vérin. En particulier, l'orifice de fuite peut être formé dans le corps du vérin constituant la paroi de la chambre d'expansion des gaz du côté du générateur de gaz. Comme variante, l'orifice de fuite peut également être positionné de manière à ne pas être en contact avec la chambre d'expansion des gaz avant déclenchement du vérin. Cette variante permet d'éviter les pertes d'énergie lors du déclenchement du vérin. Comme alternative, l'orifice de fuite peut être prévu dans le corps du piston. Dans ce cas, les gaz issus de la combustion sont évacués, à travers cet orifice, en direction du capot. De plus, le corps de vérin n'étant pas ouvert vers l'extérieur, on résout les problèmes éventuels liés à l'étanchéité.

Selon une disposition avantageuse de l'invention, l'élément de liaison est constitué d'un matériau déformable ou cassable. Il peut s'agir par exemple d'un ressort de rappel ou d'un morceau de mousse. Avantageusement, l'élément de liaison peut être composé d'un support annulaire formant barillet, monté mobile dans ladite cavité et maintenant lesdites billes.

Selon une autre disposition avantageuse, l'élément coulissant exerce une résistance au déplacement supérieure à la force exercée par le ressort de rappel. En particulier, cette résistance au déplacement peut être augmentée par l'implantation d'un frotteur sur la surface de l'élément coulissant située en regard de la paroi interne du corps du vérin.

Selon une première variante de l'invention, l'élément coulissant et la tige ne forment qu'une seule et même pièce.

Selon une deuxième variante de l'invention, l'élément de liaison et la tige ne forment qu'une seule et même pièce, et une deuxième cavité est formée sur la périphérie de la tige, prolongeant le second tronçon de la première cavité annulaire délimitée par la surface interne du corps de vérin et l'élément coulissant. Le piston est logé dans cette deuxième cavité, une des faces du piston étant reliée à au moins une bille par l'intermédiaire d'un élément de liaison et l'autre face étant reliée à la tige par un ressort de rappel.

La présente invention améliore considérablement l'usage des systèmes de sécurité connus en cas de non-choc, du fait qu'elle permet le retour du capot dans sa position initiale au bout d'un certain temps après soulèvement, soit manuellement, soit automatiquement ou sous l'effet de son propre poids. Suite à un déclenchement erroné du système, l'effort exercé sur le piston va progressivement diminuer en raison, par exemple, du refroidissement des gaz de combustion ou de la libération du gaz ou du fluide contenu dans la chambre du piston par un orifice de fuite formé dans le corps du vérin ou dans le corps du piston. Lorsque cet effort est revenu à une valeur inférieure à la valeur seuil au-delà de laquelle les billes sont replacées dans le premier tronçon de la cavité annulaire par détente du ressort, le système de freinage en retour est désamorcé. Ainsi, au bout d'un laps de temps donné, le retour du capot vers sa position initiale ne peut plus être freiné, quelque soit la force appliquée sur le capot pour le rabattre.

En outre, lorsque le poids du capot suffit à le ramener dans sa position initiale, l'intervention du conducteur n'est pas indispensable et celui-ci peut continuer sa course sans arrêter son véhicule, dès lors que le système de freinage en retour s'est désamorcé et que le capot s'est rabaissé.

L'invention sera mieux comprise et d'autres avantages de celle-ci apparaîtront mieux à la lumière de la description qui va suivre de plusieurs modes de réalisation d'un vérin conforme à son principe, donnée uniquement à titre d'exemple et faite en référence aux dessins annexés dans lesquels :
- la figure 1 est une vue générale schématique, en coupe longitudinale, d'un vérin conforme à l'invention ;
- les figures 2 à 6 sont des vues schématiques illustrant le fonctionnement de l'agencement de freinage en retour ;
- la figure 7 représente une première variante de réalisation d'un vérin à course déclenchée selon la présente invention ;
- la figure 8 représente une deuxième variante de réalisation d'un vérin selon l'invention ;
- la figure 9 représente une variante de montage.

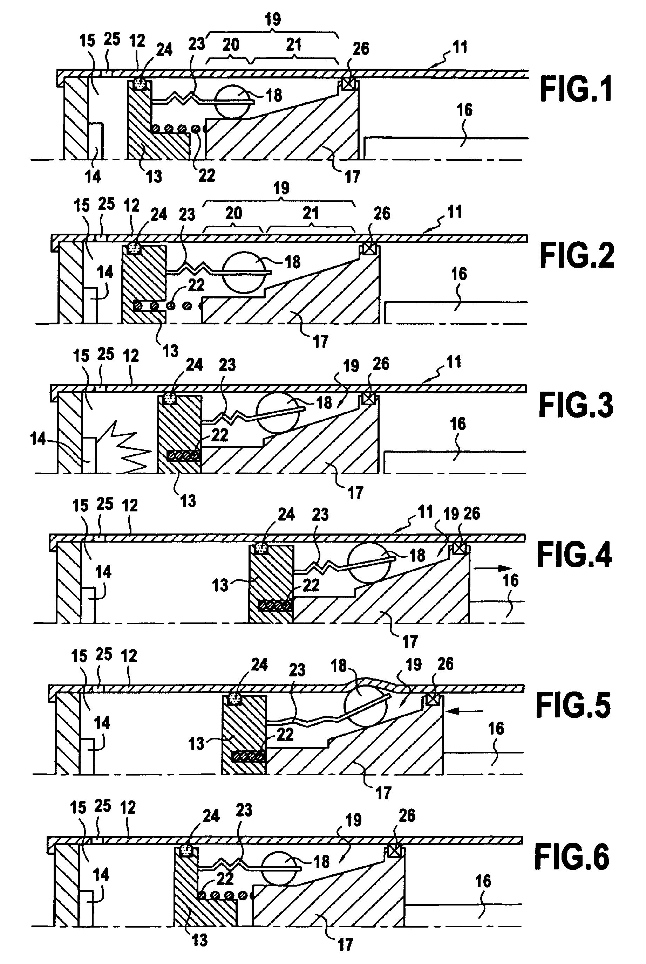

Sur la figure 1, on a représenté un vérin 11 conforme à l'invention. Ce vérin est constitué d'un corps 12, contenant un piston 13 monté en regard d'un générateur de gaz 14, une chambre d'expansion de gaz 15 ménagée entre le générateur 14 et le piston 13, une tige 16 faisant saillie axialement à une extrémité du corps, et un élément coulissant 17 logé entre le piston 13 et la tige 16. Dans le présent mode de réalisation, l'élément coulissant 17 est indépendant et disposé entre la tige 16 et le piston 13.

Au moins une bille 18 est logée dans une cavité annulaire 19 délimitée par le corps du vérin 12 d'une part et par l'élément coulissant 17 d'autre part. Cette cavité est composée d'un premier tronçon 20 de hauteur radiale légèrement supérieure au diamètre de la bille et d'un second tronçon 21 de hauteur radiale décroissante à partir de l'extrémité du premier tronçon 20. De préférence, on prévoit plusieurs billes agencées en couronne. Un ressort de compression 22 est interposé entre le piston 13 et l'élément coulissant 17. Un élément de liaison 23 relie le piston 13 à la pluralité de billes 18. Le ressort de rappel 22 et l'élément de liaison 23 sont liés à une même face du piston 13 en regard de l'élément coulissant 17. Les dimensions de l'élément de liaison 23 sont choisies comme suit : L'élément de liaison positionne les billes 18 dans le premier tronçon 20 de la cavité annulaire 19 lorsque le ressort 22 est détendu et dans le second tronçon 21 de la cavité 19 lorsque le ressort 22 est comprimé. L'élément de liaison 23 doit présenter une rigidité suffisante pour que les billes 18 soient solidaires de son déplacement, dans la direction longitudinale, lorsque le ressort 22 se comprime ou se détend en réponse à une variation de l'effort exercé sur le piston 13. Les billes 18 sont ainsi liées à l'élément de liaison 23 dans un même mouvement, par contact direct, de sorte que la distance entre les billes 18 et le piston 13 est maintenue constante. Après un choc, les billes sont introduites par force dans la partie la plus étroite du second tronçon 21 de la cavité annulaire 19 de façon à freiner puis bloquer le retour du piston 13. L'élément de liaison 23 doit pouvoir se déformer afin de suivre le mouvement des billes ou se casser pour les libérer. L'élément de liaison peut par conséquent être un ressort, un morceau de mousse ou de plastique, ou tout autre élément remplissant les conditions précédemment énoncées. Alternativement, une cage supportant les billes peut constituer l'élément de liaison.

Sur sa périphérie, le piston 13 est muni d'au moins une gorge apte à recevoir un joint d'étanchéité torique 24, assurant l'étanchéité entre la chambre d'expansion des gaz 15 et la cavité annulaire 19. La chambre d'expansion des gaz 15 est munie d'un orifice de fuite calibré 25 permettant d'agir sur l'évolution de la dépressurisation de ladite chambre 15 après le fonctionnement du générateur de gaz 14. Le dimensionnement de cet orifice 25 est fonction de nombreux paramètres tels que la vitesse de désamorçage souhaitée et les gaz mis en oeuvre. Dans le cas de certains actionneurs pyrotechniques, le refroidissement des gaz induit une diminution de volume suffisante pour désamorcer l'agencement de freinage, rendant le recours à un orifice de fuite superflu.

Un frotteur 26 est, en outre, disposé sur la périphérie de l'élément coulissant 17. Il a pour rôle d'accentuer la résistance au déplacement de l'élément coulissant 17 le long de la paroi interne du corps de vérin 12.

De telles dispositions définissent un agencement de freinage en retour qui peut être désamorcé lorsque la force s'exerçant sur le piston 13 diminue jusqu'à être inférieure à une valeur seuil. Ceci est illustré par les figures 2 à 6.

La figure 2 représente, au repos, un vérin à actionnement pyrotechnique conforme à la présente invention. Initialement, la pression dans la chambre d'expansion des gaz 15 est égale à la pression atmosphérique, de sorte que le ressort de rappel 22 est détendu. Grâce à l'élément de liaison 23, les billes 18 sont positionnées dans le premier tronçon 20 de la cavité annulaire 19 définie par la surface interne du corps de vérin 12 et l'élément coulissant 17. Lors d'un choc, le générateur de gaz 14 est déclenché, la pression atteint quasi instantanément une valeur très élevée et le ressort 22 se comprime. A ce moment, le piston 13 se déplace par rapport à l'élément coulissant 17 jusqu'à entrer en contact avec celui-ci. Les billes 18 étant solidaires des mouvements du piston 13 par l'intermédiaire de l'élément de liaison 23 suffisamment rigide, elles se déplacent elles-aussi en direction du second tronçon de la cavité annulaire 19, pour finalement s'y engager. A cet instant, le système de freinage en retour est armé (figure 3).

La figure 4 montre la phase de déploiement du vérin. Le ressort de rappel 22 est comprimé et le piston 13 entraîne conjointement l'élément coulissant 17 et la tige 16.

La figure 5 illustre le fonctionnement de l'agencement de freinage en retour lors d'un choc sur le capot intervenant alors que la pression dans la chambre d'expansion 15 est supérieure à la valeur seuil. Le frottement sur la surface interne du corps 12 et la légère pression exercée par l'élément de liaison 23 lors du retour du piston, font remonter les billes 18 dans le deuxième tronçon 21 de la cavité annulaire 19. Elles freinent d'abord le retour de la tige 16 en appuyant sur le corps 12, puis le bloquent en déformant ledit corps. Durant ce processus de freinage, l'élément de liaison 23 qui maintient les billes 18 se déforme pour suivre leur mouvement.

La figure 6 montre l'état du vérin après son déploiement en cas de non choc, la pression dans la chambre d'expansion 15 étant redescendue en dessous de la pression seuil. Le ressort de rappel 22 reliant le piston 13 à l'élément coulissant 17 s'est à nouveau détendu et le piston 13 s'est écarté de l'élément coulissant 17, entraînant le retour des billes 18 dans le premier tronçon 20 de la cavité annulaire 19. L'agencement de freinage en retour est ainsi désarmé et le capot peut être ramené sans effort dans sa position initiale.

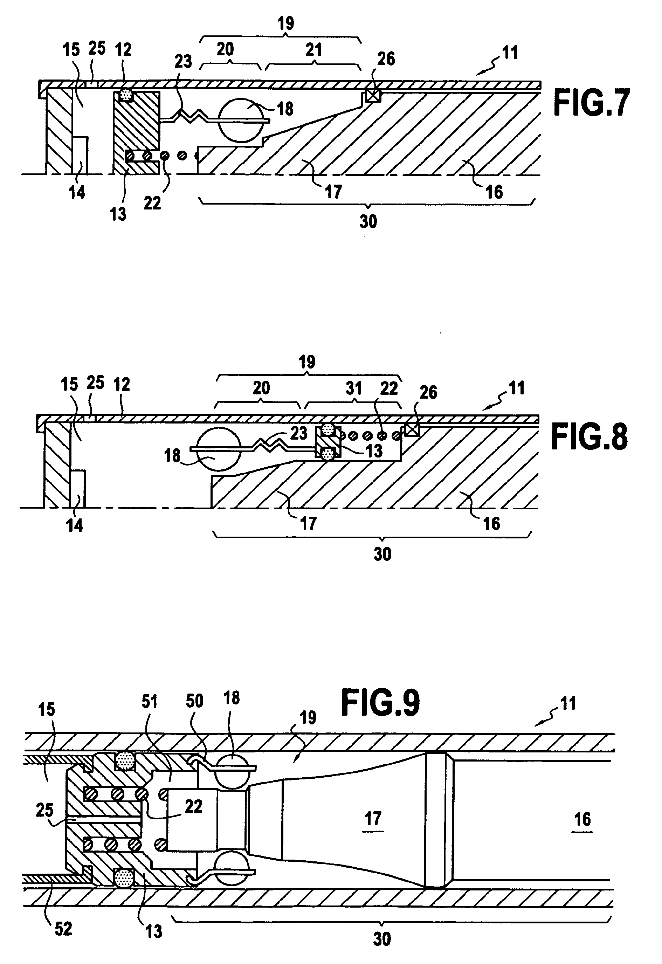

Les figures 7 à 9 représentent trois variantes de réalisation de vérins à course déclenchée selon la présente invention.

Selon une première variante illustrée par la figure 7, l'élément coulissant 17 et la tige 16 ne forment qu'une seule et même pièce 30. Le ressort de rappel 22 et l'élément de liaison 23 sont, par ailleurs, liés à la même face du piston 13 en regard de ladite pièce coulissante 30. Le fonctionnement de l'agencement de freinage est rigoureusement identique à celui décrit précédemment.

La deuxième variante illustrée par la figure 8 constitue un cas particulier de la première variante décrite ci-dessus. Ici également, l'élément coulissant 17 et la tige 16 ne forment qu'une même pièce 30. Toutefois, le ressort de rappel 22 et l'élément de liaison 23 sont liés respectivement aux deux faces opposées d'un piston annulaire 13. Plus précisément, la cavité annulaire 19 définie par le corps de vérin 12 et l'élément coulissant 17 est prolongée par une deuxième cavité 31 formée sur la périphérie de la tige et contenant le piston 13. Une des faces du piston 13 (en regard du générateur de gaz 14) est liée aux billes 18 par l'intermédiaire de l'élément de liaison 23, tandis que la face opposée du piston est reliée à la tige 16 par le ressort de rappel 22. Dans cette deuxième variante, l'effort résultant de l'augmentation de pression dans la chambre d'expansion 15 s'applique à la fois au piston 13 et à la pièce unique 30 formée par l'élément coulissant 17 et la tige 16, du fait que le piston est annulaire et situé dans une cavité de ladite tige.

Selon une variante de montage semblable à celle de la figure 7 et illustrée sur la figure 9, les billes sont logées dans un support annulaire 50 formant barillet, monté mobile dans la cavité annulaire 19. Le barillet remplit ici la fonction de l'élément de liaison. Par ailleurs, l'orifice de fuite 25 est ici prévu dans le corps du piston. Après combustion, les gaz sont évacués par cet orifice 25 en direction du capot, permettant ainsi de désamorcer l'agencement de freinage en retour.

Le ressort 22 est logé dans une cavité 51 du piston 13. Celui-ci est, avant déclenchement du générateur de gaz 14, maintenu dans une position de repos prédéterminée par un élément annulaire cassable 52. La chambre d'expansion des gaz 15 a ainsi un volume minimum prédéterminé et le piston 13 ne se déplace que lorsque la pression a atteint une certaine valeur.

## Revendications

1. Vérin à course déclenchée du type comportant un corps (12) abritant un ensemble mobile comprenant un piston (13) et une tige (16) faisant saillie à une extrémité dudit corps (12), des moyens pour propulser ledit piston (13) en réponse à une commande de déclenchement, et un agencement de freinage en retour,
dans lequel l'ensemble mobile comprend en outre un élément coulissant (17) mobile dans ledit corps (12),
dans lequel l'agencement de freinage en retour comprend au moins une bille (18) logée dans une cavité annulaire (19) délimitée par la surface interne dudit corps (12) et par ledit élément coulissant (17), ladite cavité (19) comportant deux tronçons adjacents dans le prolongement l'un de l'autre, un premier tronçon (20) de hauteur radiale supérieure au diamètre de ladite bille (18) et un second tronçon (21) de hauteur radiale décroissante à partir de l'extrémité dudit premier tronçon,
dans lequel l'agencement de freinage en retour comporte en outre un ressort de rappel (22) reliant ledit élément coulissant (17) audit piston (13),
et dans lequel l'agencement de freinage en retour comporte en outre un élément de liaison (23) reliant la au moins une bille (18) au piston (13),
**caractérisé en ce que** la bille (18) est solidaire du déplacement de l'élément de liaison (23) et **en ce que** la bille (18) est positionnée par l'élément de liaison (23) dans ledit premier tronçon (20) de la cavité annulaire (19) lorsque le ressort de rappel (22) est détendu, et dans le second tronçon (21) lorsque le ressort de rappel (22) est comprimé, de sorte que l'agencement de freinage est désamorcé lorsque l'effort appliqué sur le piston (13) redevient inférieur à une valeur seuil.

2. Vérin selon la revendication 1, **caractérisé en ce que** l'effort appliqué sur le piston (13) résulte d'une pression régnant dans une chambre d'expansion des gaz (15), dont le piston (13) constitue une paroi, après fonctionnement d'un générateur de gaz (14).

3. Vérin selon la revendication 1 ou 2, **caractérisé en ce que** l'agencement de freinage comporte plusieurs billes et **en ce que** lesdites billes (18) sont logées dans un support annulaire (50) formant barillet, monté mobile dans ladite cavité (19).

4. Vérin selon la revendication 1 ou 2, **caractérisé en ce que** ledit élément de liaison (23) est constitué d'un matériau déformable ou cassable.

5. Vérin selon l'une quelconque des revendications 1 à 4, **caractérisé en ce que** le piston (13), l'élément coulissant (17) et la tige (16) forment trois pièces indépendantes espacées longitudinalement les unes des autres dans le corps, dans cet ordre.

6. Vérin selon l'une quelconque des revendications 1 à 4, caractérisé en ce ledit élément coulissant (17) et ladite tige (16) ne forment qu'une même pièce (30).

7. Vérin selon la revendication 6, **caractérisé en ce qu'**une seconde cavité (31) est formée sur la périphérie de la tige, prolongeant le second tronçon (21) de la première cavité (19) annulaire délimitée par la surface interne dudit corps (12) et par ledit élément coulissant (17), **en ce que** le piston (13) est logé dans ladite deuxième cavité annulaire (31) de la tige, et **en ce qu'**une des faces du piston (13) est reliée à au moins une bille (18) par l'intermédiaire d'un élément de liaison (23) et l'autre face est reliée à la tige (16) par un ressort de rappel (22).

8. Vérin selon l'une quelconque des revendications 1 à 7, **caractérisé en ce que** ledit élément coulissant (17) exerce une résistance au déplacement supérieure à la force exercée par ledit ressort de rappel (22).

9. Vérin selon l'une quelconque des revendications 1 à 8, **caractérisé en ce qu'**un frotteur (26) est disposé à la périphérie de l'élément coulissant (17).

10. Vérin selon l'une quelconque des revendications 1 à 9, **caractérisé en ce que** lesdits moyens pour propulser ledit piston (13) en réponse à une commande de déclenchement comportent un générateur de gaz à actionnement pyrotechnique (14), monté dans ledit corps (12) en regard dudit piston (13).

11. Vérin selon la revendication 2 et l'une quelconque des revendications 3 à 10, **caractérisé en ce qu'**il comporte un orifice de fuite (25), calibré, destiné à baisser progressivement le niveau de pression dans la chambre d'expansion des gaz (15).

12. Vérin selon la revendication 11, **caractérisé en ce que** l'orifice de fuite (25) est formé dans le corps du vérin constituant la paroi de la chambre d'expansion des gaz (15) du côté du générateur de gaz (14).

13. Vérin selon la revendication 11, **caractérisé en ce que** l'orifice de fuite (25) est positionné dans le corps du vérin (12), de manière à ne pas être en contact avec la chambre d'expansion des gaz (15) avant déclenchement du vérin.

14. Vérin selon la revendication 11, **caractérisé en ce que** l'orifice de fuite (25) est formé dans le corps du piston (13).

## Patentansprüche

1. Zylinder mit Hubauslösung vom Typ mit einem Körper (12), der eine bewegliche Einheit einschließt, der einen Kolben (13) und eine Stange (16) umfaßt, die an einem Ende des Körpers (12) vorspringend ist, Mitteln, um den Kolben (13) als Reaktion auf einen Auslösebefehl anzutreiben, und einer Bremsvorrichtung für die Rückbewegung,
bei dem die bewegliche Einheit ferner ein im Körper (12) bewegliches Gleitelement (17) umfaßt,
bei dem die Bremsanordnung für die Rückbewegung mindestens eine Kugel (18) umfaßt, die in einem ringförmigen Hohlraum (19) angeordnet ist, der von der Innenfläche des Körpers (12) und von dem Gleitelement (17) begrenzt ist, wobei der Hohlraum (19) zwei in der Verlängerung des einen zum anderen aneinander angrenzende Abschnitte umfaßt, einen ersten Abschnitt (20) mit einer größeren radialen Höhe als der Durchmesser der Kugel (18) und einen zweiten Abschnitt (21) mit einer vom Ende des ersten Abschnitts aus abnehmenden radialen Höhe,
bei dem die Bremsanordnung für die Rückbewegung ferner eine Rückstellfeder (22) umfaßt, die das Gleitelement (17) mit dem Kolben (13) verbindet,
und bei dem die Bremsanordnung für die Rückbewegung ferner ein Verbindungselement (23) umfaßt, das die mindestens eine Kugel (18) mit dem Kolben (13) verbindet,
**dadurch gekennzeichnet, daß** die Kugel (18) mit der Verschiebung des Verbindungselements (23) verbunden ist, und daß die Kugel (18) durch das Verbindungselement (23) in dem ersten Abschnitt (20) des ringförmigen Hohlraums (19) positioniert wird, wenn die Rückstellfeder (22) entspannt ist, und in dem zweiten Abschnitt (21), wenn die Rückstellfeder (22) komprimiert ist, so daß die Bremsanordnung deaktiviert wird, wenn die auf den Kolben (13) ausgeübte Kraft wieder kleiner als ein Schwellenwert wird.

2. Zylinder nach Anspruch 1, **dadurch gekennzeichnet, daß** die auf den Kolben (13) ausgeübte Kraft von einem Druck stammt, der in einer Gasexpansionskammer (15), deren Kolben (13) eine Wand darstellt, nach dem Betrieb eines Gasgenerators (14) herrscht.

3. Zylinder nach Anspruch 1 oder 2, **dadurch gekennzeichnet, daß** die Bremsanordnung mehrere Kugeln umfaßt, und daß die Kugeln (18) in einem ein Gehäuse bildenden ringförmigen Träger (50) angeordnet sind, der in dem Hohlraum (19) beweglich montiert ist.

4. Zylinder nach Anspruch 1 oder 2, **dadurch gekennzeichnet, daß** das Verbindungselement (23) aus einem verformbaren oder brechbaren Material hergestellt ist.

5. Zylinder nach einem der Ansprüche 1 bis 4, **dadurch gekennzeichnet, daß** der Kolben (13), das Gleitelement (17) und die Stange (16) drei unabhängige Teile bilden, die in Längsrichtung in dem Körper in dieser Reihenfolge voneinander beabstandet sind.

6. Zylinder nach einem der Ansprüche 1 bis 4, **dadurch gekennzeichnet, daß** das Gleitelement (17) und die Stange (16) ein einziges Teil (30) bilden.

7. Zylinder nach Anspruch 6, **dadurch gekennzeichnet, daß** ein zweiter Hohlraum (31) an der Peripherie der Stange ausgebildet ist, der den zweiten Abschnitt (21) des ersten ringförmigen Hohlraums (19) verlängert, der durch die Innenfläche des Körpers (12) und durch das Gleitelement (17) begrenzt ist, daß der Kolben (13) in dem zweiten ringförmigen Hohlraum (31) der Stange angeordnet ist, und daß eine der Seiten des Kolbens (13) mit mindestens einer Kugel (18) über ein Verbindungselement (23) und die andere Seite mit der Stange (16) durch eine Rückstellfeder (22) verbunden ist.

8. Zylinder nach einem der Ansprüche 1 bis 7, **dadurch gekennzeichnet, daß** das Gleitelement (17) einen Verschiebewiderstand ausübt, der größer als die von der Rückstellfeder (22) ausgeübte Kraft ist.

9. Zylinder nach einem der Ansprüche 1 bis 8, **dadurch gekennzeichnet, daß** ein Reibelement (26) an der Peripherie des Gleitelements (17) angeordnet ist.

10. Zylinder nach einem der Ansprüche 1 bis 9, **dadurch gekennzeichnet, daß** die Mittel für den Antrieb des Kolbens (13) als Reaktion auf einen Auslösebefehl einen Gasgenerator mit pyrotechnischer Betätigung (14) umfassen, der im Körper (12) gegenüber dem Kolben (13) montiert ist.

11. Zylinder nach Anspruch 2 und einem der Ansprüche 3 bis 10, **dadurch gekennzeichnet, daß** er eine kalibrierte Leckageöffnung (25) umfaßt, die dazu bestimmt ist, nach und nach das Druckniveau in der Gasexpansionskammer (15) zu senken.

12. Zylinder nach Anspruch 11, **dadurch gekennzeichnet, daß** die Leckageöffnung (25) in dem Körper des Zylinders ausgebildet ist, der die Wand der Gasexpansionskammer (15) auf der Seite des Gasgenerators (14) darstellt.

13. Zylinder nach Anspruch 11, **dadurch gekennzeichnet, daß** die Leckageöffnung (25) im Körper des Zylinder (12) angeordnet ist, um mit der Gasexpansionskammer (15) vor der Auslösung des Zylinders nicht in Kontakt zu sein.

14. Zylinder nach Anspruch 11, **dadurch gekennzeichnet, daß** die Leckageöffnung (25) im Körper des Kolbens (13) ausgebildet ist.

## Claims

1. A triggered stroke actuator of the type including a body (12) housing a movable assembly comprising a piston (13) and a rod (16) projecting from one end of said body (12), means for propelling said piston (13) in response to a trigger command, and a return braking arrangement,
wherein the movable assembly further comprises a slidable element (17) that is movable in said body (12),
wherein the return braking arrangement comprises at least one ball (18) housed in an annular cavity (19) delimited by the inside surface of said body (12) and by said slidable element (17), said cavity (19) having two adjacent segments extending one another, a first segment (20) of radial height greater than the diameter of said ball (18) and a second segment (21) of radial height decreasing from the end of said first section,
wherein the return braking arrangement further includes a return spring (22) connecting said slidable element (17) to said piston (13),
and wherein the return braking arrangement further includes a link element (23) connecting the at least one ball (18) to said piston (13),
**characterised in that** the ball (18) is constrained to move with the link element (23) and **in that** the ball (18) is positioned by the link element (23) in said first segment (20) of the annular cavity (19) when the return spring (22) is relaxed, and in the second segment (21) when the return spring (22) is compressed such that the braking arrangement is disarmed when the force applied to the piston (13) returns to a value lower than a threshold value.

2. The actuator according to Claim 1, **characterised in that** the effort applied to the piston (13) results from a pressure that exists in a gas expansion chamber (15) after a gas generator (14) has operated, with the piston (13) constituting a wall of the chamber.

3. The actuator according to Claim 1 or 2, **characterised in that** said braking arrangement includes a plurality of balls and said balls (18) are housed in an annular support (50) forming a cylinder, mounted to move in said cavity (19).

4. The actuator according to Claim 1 or 2, **characterised in that** said link element (23) is made up of a material that is deformable or breakable.

5. The actuator according to any one of Claims 1 to 4, **characterised in that** the piston (13), the slidable element (17) and the rod (16) form three independent parts that are longitudinally spaced apart from one another inside the body, **in that** order.

6. The actuator according to any one of Claims 1 to 4, **characterised in that** said slidable element (17) and said rod (16) form a single part (30).

7. The actuator according to Claim 6, **characterised in that** a second cavity (31) is formed at the periphery of the rod, extending the second section (21) of the first annular cavity (19) delimited by the inside surface of said body (12) and by said slidable element (17), **in that** the piston (13) is housed in said second annular cavity (31) of the rod, and **in that** one of the faces of the piston (13) is connected to at least one ball (18) by means of a link element (23) and the other face is connected to the rod (16) by a return spring (22).

8. The actuator according to any one of Claims 1 to 7, **characterised in that** said slidable element (17) exerts resistance to movement that is greater than the force exerted by said return spring (22).

9. The actuator according to any one of Claims 1 to 8, **characterised in that** a friction member (26) is arranged at the periphery of the slidable element (17).

10. The actuator according to any one of Claims 1 to 9, **characterised in that** said means for propelling said piston (13) in response to a trigger command comprise a pyrotechnically actuated gas generator (14), mounted in said body (12) facing said piston (13).

11. The actuator according to Claim 2 and any one of Claims 3 to 10, **characterised in that** it comprises a calibrated leakage port (25) for lowering the level of pressure inside the gas expansion chamber (15) progressively.

12. The actuator according to Claim 11, **characterised in that** the leakage port (25) is formed in the body of the actuator constituting the wall of the gas expansion chamber (15) beside the gas generator (14).

13. The actuator according to Claim 11, **characterised in that** the leakage port (25) is positioned in the body of the actuator (12) in such a manner as to make no contact with the gas expansion chamber (15) prior to the actuator being triggered.

14. The actuator according to Claim 11, **characterised in that** the leakage port (25) is formed in the body of the piston (13).
